Europäisches Patentamt

European Patent Office

Office européen des brevets

(19)

(11) Numéro de publication: **0 227 861 B1**

(12) **FASCICULE DE BREVET EUROPEEN**

(45) Date de publication du fascicule du brevet: 04.07.90

(51) Int. Cl.⁵: **G01B 11/04,** G01B 11/06

(21) Numéro de dépôt: 85202134.4

(22) Date de dépôt: 24.12.85

(54) **Procédé de mesure d'une grandeur physique fournissant des données numériques à partir de dispositifs de mesure de valeurs analogiques et appareil de mesure appliquant ce procédé.**

(43) Date de publication de la demande:
08.07.87 Bulletin 87/28

(45) Mention de la délivrance du brevet:
04.07.90 Bulletin 90/27

(84) Etats contractants désignés:
AT BE CH DE FR GB IT LI LU NL SE

(56) Documents cités:
EP-A- 0 073 467
EP-A- 0 101 049
DE-B- 2 231 776
US-A- 3 586 445
US-A- 4 247 764

(73) Titulaire: **BARCO AUTOMATION, NAAMLOZE VENNOOTSCHAP, Frankrijklaan 18, B-8970 Poperinge(BE)**

(72) Inventeur: **Vanstaen, Roland, Vogelzanglaan 30, B-8500 Kortrijk(BE)**

(74) Mandataire: **Bossard, Franz et al, BOSSARD CONSULTANTS S.P.R.L. 288, rue de Jamioulx, B-6110 Montigny-le-Tilleul(BE)**

ACTORUM AG

## Description

La présente invention a pour objet général un procédé de mesure d'une grandeur physique fournissant des données numériques à partir de dispositifs de mesure de valeurs analogiques dont le signal de réponse analogique est influencé par des paramètres tels que la température ou la pression ambiantes et/ou dont la sensibilité varie au cours du temps, par exemple à cause d'effets de vieillissement de certains de ses composants.

Le but de l'invention est un procédé permettant de fournir une valeur absolue toujours correcte de la grandeur physique mesurée, malgré les inconvénients précités des dispositifs de mesure.

Il est déjà connu, par exemple par le document EP-A 0 073 467 de mesurer une grandeur physique au moyen d'une source lumineuse dont la lumière frappe d'une part un objet à mesurer et est capté par un premier capteur, et frappe d'autre part un deuxième capteur, sans rencontrer l'objet à mesurer, le dit deuxième capteur étant identique au premier capteur, un ensemble composé d'un diviseur et d'un convertisseur analogique-numérique recevant les sorties des dits premier et deuxième capteurs, la sortie du dit ensemble étant reliée à un dispositif d'affichage et/ou de traitement de données.

Par rapport à cet état de la technique, l'invention a pour but particulier un procédé très simple dans lequel la division et la conversion des valeurs analogiques en valeurs numériques sont réalisées simultanément en une seule étape.

Ainsi, un procédé de mesure de la valeur d'une grandeur physique au moyen d'un premier dispositif de mesure produisant à sa sortie une tension ou un courant électrique, fonction de la valeur de la dite grandeur physique, dans lequel, simultanément, on mesure une valeur de référence de cette grandeur physique au moyen d'un deuxième dispositif de mesure, et dans lequel on applique les signaux de sortie des dits dispositifs de mesure à deux entrées d'un ensemble composé d'un diviseur et d'un convertisseur analogique-numérique dont on envoie les signaux numériques de sortie vers un dispositif d'affichage et/ou de traitement de données est caractérisé en ce que directement, sans passer par un diviseur préalable, on relie à un convertisseur analogique-numérique comprenant une première entrée pour un signal analogique de mesure et une deuxième entrée pour un signal analogique déterminant une valeur de seuil variable du convertisseur, respectivement les sorties des dits premier et deuxième dispositifs de mesure, afin qu'à la sortie du convertisseur apparaisse une valeur numérique représentant le quotient de la valeur du signal de sortie du premier dispositif de mesure par la valeur du signal de sortie du deuxième dispositif de mesure.

L'invention concerne également un appareil de mesure appliquant le procédé ci-dessus qui est très peu coûteux et peu encombrant et permet notamment de mesurer la largeur ou l'épaisseur d'un fil ou ruban au défilé par des moyens optiques.

Cet appareil est caractérisé en ce qu'il comprend un dispositif de guidage d'un fil ou ruban permettant la mesure au défilé de la largeur ou épaisseur du fil ou ruban à mesurer, en ce que la source lumineuse projette l'ombre ou l'image du fil ou ruban à mesurer sur la plaquette sensible d'un premier capteur et en ce qu'il comprend un convertisseur analogique-numérique, non accompagné d'un diviseur séparé, possédant une première entrée pour le signal de sortie du dit premier capteur et une deuxième entrée déterminant une valeur de seuil variable pour le signal de sortie du deuxième capteur.

Une disposition extrêmement simple et peu coûteuse est obtenue lorsque la source lumineuse est une source ponctuelle d'étendue sensiblement plus faible que la largeur ou l'épaisseur moyenne du fil ou ruban à mesurer et lorsque cette source n'est pas équipée d'un système à lentilles.

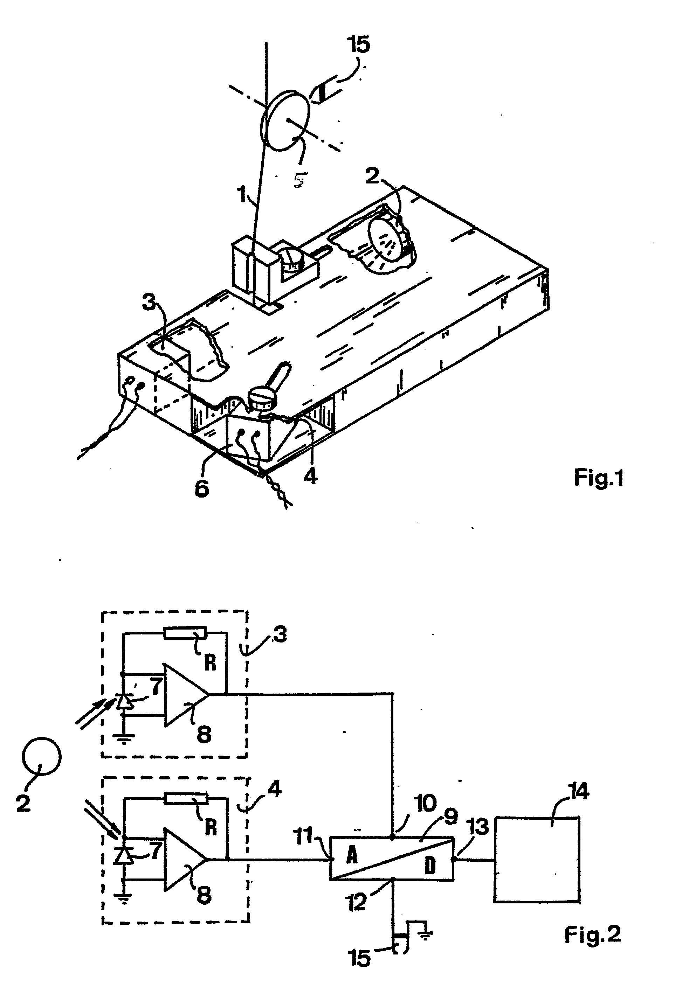

L'invention est expliquée ci-dessous à l'aide d'un exemple d'une forme d'exécution en se référant au dessin annexé: La figure 1 du dessin est une vue en perspective d'un appareil de mesure suivant l'invention. La figure 2 est un schéma électrique de l'appareil suivant l'invention.

Un appareil de mesure au défilé, notamment de l'épaisseur d'un fil textile 1 comprend une source de lumière ponctuelle 2 d'étendue, de préférence, sensiblement plus petite que l'épaisseur moyenne du fil à mesurer, un premier capteur dit " de mesure " 3 et un deuxième capteur dit "de référence"4. Le faisceau lumineux frappant le capteur de mesure 3, est traversé par le fil 1 à mesurer, guidé par un dispositif 5 approprié. Le dispositif 5 est de préférence réglable et permet de guider le fil de telle manière que d'une part son image tombe environ au milieu du capteur 3 et que d'autre part sa distance par rapport au capteur 3 peut-être ajustée à une valeur prédéterminée.

Un autre faisceau lumineux, ne rencontrant pas le fil 1 à mesurer, frappe le capteur de référence 4. Ce capteur 4 est monté sur un support réglable 6. Le réglage de ce support 6 permet, soit le déplacement du capteur 4 parallèlement au faisceau émanant de la source 1, soit la modification de son orientation par rapport à ce faisceau, dans le but d'ajuster le signal de sortie du capteur de référence 4 pour qu'il devienne identique au signal de sortie du capteur de mesure 3 en cas d'absence de fil 1 dans le faisceau entre source 2 et capteur 3.

Il va de soi que ce réglage peut-être prévu aussi à l'endroit du capteur 3 au lieu du capteur 4.

Il est à noter d'une part qu'une source de lumière ponctuelle 2 d'une étendue de 0,1 mm du commerce, alimentée par une source de tension constante possède une luminosité qui décroît avec le temps et tombe à 80 % de sa valeur initiale au terme de 10.000 à 20.000 heures de fonctionnement. Il est donc important d'éliminer des résultats mesurés cette variation sensible de la source de lumière au moyen d'une mesure de référence.

D'autre part, la luminosité varie également en fonction de la température ambiante. De plus, les capteurs de mesure, en l'occurence des diodes opto-électriques 7 branchées en court-circuit suivant le schéma de la figure 2 et combinées avec un amplificateur 8 mis en parallèle, avec une résistance R présentent aussi des variations de sensibilité, notamment en fonction de la température et aussi en fonction du temps.

En choisissant des capteurs identiques pour servir de capteur de mesure 3 et de capteur de référence 4, les variations de la sensibilité en fonction du temps et des paramètres de l'ambiance sont les mêmes, de sorte que la valeur mesurée peut en tout temps être corrigée grâce à une comparaison avec la valeur de référence mesurée simultanément.

Habituellement, cette comparaison se fait au moyen d'un dispositif de comparaison analogique, ce qui est très coûteux. Suivant l'invention, cette comparaison a lieu dans un convertisseur analogique-numérique à valeur de seuil variable. Ce convertisseur 9 comprend deux entrées de mesure 10 et 11. En l'occurrence, à l'entrée 10 est appliquée le signal de sortie du capteur de mesure 3, tandis que la valeur de référence apparaissant à la sortie du capteur 4 est appliquée à l'entrée de mesure 11 qui détermine la valeur de seuil variable. Le convertisseur analogique-numérique 9 comprend en outre une entrée 12 pour le signal imposant la cadence d'échantillonnage et une sortie 13 fournissant les données numériques mesurées qui représentent le quotient de la mesure faite par le capteur 3 divisée par la mesure faite par le capteur 4. Les données numériques apparaissant à la sortie 13 sont introduits dans un dispositif 14 de traitement et/ou d'affichage de données numériques.

Le dispositif 14 peut fournir notamment une moyenne effectuée sur un temps d'échantillonnage plus long que celui du convertisseur analogique-numérique 9 et l'écart quadratique moyen pendant ce temps d'échantillonnage plus long. L'affichage peut se faire, par exemple, de manière graphique instantanée ou de manière numérique pour ce qui est du temps d'échantillonnage plus long. Il est possible de limiter l'affichage à des valeurs tombant en dehors d'une gamme de valeurs admissibles.

Dans le présent exemple, on a utilisé comme source de lumière une source " Lambert " c'est-à-dire une source de lumière ponctuelle dont l'étendue est inférieure à 0,1 mm. Ceci peut être fait lorsque l'épaisseur moyenne du fil à mesurer est égale à plusieurs dixièmes de millimètres.

Si l'épaisseur du fil à mesurer est trop petite, il est necessaire de travailler avec des faisceaux à rayons de lumière parallèles, ce qui nécessite l'utilisation de systèmes optiques coûteux à lentilles.

Les capteurs 3 et 4 se présentent sous forme de plaquettes rectangulaires dont les côtés mesurent quelques millimètres. Ces capteurs sont disposés de telle manière dans les faisceaux lumineux que l'image du fil est parallèle à une paire de côtés. Dans ce cas, le signal de sortie du capteur est proportionnel à la surface de la plaquette non illuminée à cause de l'ombre jetée par le fil, c'est-à-dire proportionnel à l'épaisseur moyenne de la portion du fil jetant l'ombre. En choisissant la largeur de la plaquette sensible du capteur 3 égale par exemple à l'image d'un fil de 2,56mm et en quantifiant l'intensité lumineuse reçue à 8 bits, on obtient ($2^8 = 256$) à la sortie 13 du convertisseur analogique-numérique 9 une donnée numérique égale au nombre de centièmes de millimètres de l'épaisseur du fil. Il est toujours possible d'obtenir à la sortie 13 un nombre égal à l'épaisseur du fil, éventuellement multiplié par une puissance de dix.

Il est important d'observer que le réglage de l'appareil de mesure suivant l'invention est de préférence fait au moyen de réglages mécaniques et non au moyen de réglages électriques. En effet, sauf en cas de capteurs de mesure insensibles aux paramètres de l'atmosphère ambiante, il n'est pas possible d'obtenir la fiabilité et la précision de mesure nécessaires, si les deux capteurs ne sont pas absolument identiques du point de vue électrique.

Le signal de commande de la cadence d'échantillonnage peut notamment être fourni par un générateur 15 ( par exemple magnétique) accouplé à un système alimentaire 16 (par exemple à galet) du fil à mesurer, de sorte que l'échantillonnage effectué par le convertisseur analogique-numérique 9 a lieu toujours pour une longueur de fil prédeterminée par exemple tous les millimètres ou tous les deux millimètres, c'est-à-dire une longueur en général plus petite que celle projetée sur la plaquette sensible du capteur 3.

## Revendications

1. Procédé de mesure de la valeur d'une grandeur physique au moyen d'un premier dispositif de mesure (2, 3) produisant à sa sortie une tension ou un courant électrique, fonction de la valeur de la dite grandeur physique, dans lequel, simultanément on mesure une valeur de référence de cette grandeur physique au moyen d'un deuxième dispositif de mesure (2, 4) identique au premier dispositif de mesure, et dans lequel on applique les signaux de sortie des dits dispositifs de mesure à deux entrées d'un ensemble composé d'un diviseur et d'un convertisseur analogique-numérique dont on envoie les signaux numériques de sortie vers un dispositif d'affichage et/ou de traitement de données (14), caractérisé en ce que directement, sans passer par un diviseur préalable, on relie à un convertisseur analogique-numérique (9) comprenant une première entrée (10) pour un signal analogique de mesure et une deuxième entrée (11) pour un signal analogique déterminant une valeur de seuil variable du convertisseur (9), respectivement les sorties des dits premier et deuxième dispositifs de mesure (2, 3; 2, 4), afin qu'à la sortie du convertisseur (9) apparaisse une valeur numérique représentant le quotient de la valeur du signal de sortie du premier dispositif de mesure (2, 3) par la valeur du signal de sortie du deuxième dispositif de mesure (2, 4).

2. Appareil de mesure comprenant une source lumineuse (2) dont la lumière frappe d'une part un objet à mesurer (1) et est capté dans un premier capteur (3), et frappe d'autre part un deuxième capteur (4), sans rencontrer l'objet à mesurer (1), le dit deuxième capteur étant identique au premier capteur, et comprenant un ensemble composé d'un diviseur et d'un convertisseur analogique-numérique recevant les sorties des dits premier et deuxième capteurs (3, 4) et dont la sortie est reliée à un dispositif d'affichage et/ou de traitement de données (14), caractérisé en ce qu'il comprend un dispositif de guidage (5) d'un fil ou ruban (1) permettant la mesure au défilé de la largeur ou épaisseur de ce fil ou ruban (1) à mesurer, en ce que la source lumineuse (2) projette l'ombre ou l'image du fil ou ruban (1) à mesurer sur la plaquette sensible du dit premier capteur (3), et en ce qu'il comprend un convertisseur analogique-numérique (9), non accompagné d'un diviseur séparé, possédant une première entrée (10) pour le signal de sortie du dit premier capteur (3) et une deuxième entrée déterminant une valeur de seuil variable pour le signal de sortie du dit deuxième capteur (4).

3. Appareil de mesure suivant la revendication 2, caractérisé en ce que le premier capteur (3) et/ou le deuxième capteur (4) sont équipés de moyens de réglage (6) d'orientation et/ou de distance par rapport à la source lumineuse (2).

4. Appareil de mesure suivant la revendication 2 ou la revendication 3, caractérisé en ce que le guide-fil (5) est réglable pour définir la position exacte du fil ou ruban (1) entre la source lumineuse (2) et le premier capteur (3).

5. Appareil de mesure suivant une des revendications 2 à 4, caractérisé en ce que la source lumineuse (2) est une source ponctuelle d'étendue sensiblement plus faible que la largeur ou l'épaisseur moyenne du fil ou ruban (1) à mesurer et en ce qu'elle n'est pas équipé d'un système à lentilles.

6. Appareil de mesure suivant une des revendications 2 à 5, caractérisé en ce que la largeur de la plaquette sensible du premier capteur (3) et la distance du fil ou ruban (1) de ce capteur (3) sont choisis de manière telle que le nombre fourni à la sortie (13) du convertisseur analogique-numérique (9) représente l'épaisseur mesurée en millimètres ou en millimètres fois une puissance de dix.

7. Appareil de mesure suivant une des revendications 2 à 6, caractérisé en ce que la cadence d'échantillonnage du convertisseur analogique-numérique (9) est déterminé par la vitesse alimentaire du fil ou ruban (1) à l'endroit du guide-fil (5) de manière que l'échantillonnage du convertisseur (9) est réalisé pour des longueurs de fil ou ruban inférieures à la longueur projetée sur la plaque sensible du capteur de mesure (3).

**Claims**

1. Method for measuring the value of a physical quantity by means of a first measuring device (2, 3) producing at its output a voltage or an electric current, dependent on the value of the said physical quantity, in which method a reference value of this physical quantity is simultaneously measured by means of a second measuring device (2, 4) identical with the first measuring device, and in which the output signals of the said measuring devices are applied to two inputs of an assembly composed of a divider and an analogue-to-digital converter from where the digital output signals are sent towards a display and/or data processing device (14), characterized in that, without passing through a prior divider, the respective outputs of the said first and second measuring devices (2, 3; 2, 4) are connected directly to an analogue-to-digital converter (9) comprising a first input (10) for an analogue measurement signal and a second input (11) for an analogue signal determining a variable threshold value of the converter (9), so that a numerical value representing the quotient of the value of the output signal of the first measuring device (2, 3) and the value of the output signal of the second measuring device (2, 4) appears at the output of the converter (9).

2. Measuring apparatus comprising a light source (2) whose light impinges, on the one hand, on an object to be measured (1) and is picked up by a first sensor (3), and impinges, on the other hand, on a second sensor (4), without encountering the object to be measured (1), the said second sensor being identical with the first sensor, and comprising an assembly composed of a divider and an analogue-to-digital converter receiving the outputs of the said first and second sensors (3, 4) and whose output is connected to a display and/or data processing device (14), characterized in that it comprises a guiding device (5) for a thread or ribbon (1) allowing the measurement, whilst unwinding, of the width or thickness of this thread or ribbon (1) to be measured, in that the light source (2) casts the shadow or the image of the thread or ribbon (1) to be measured onto the small sensitive plate of the said first sensor (3), and in that it comprises an analogue-to-digital converter (9), not accompanied by a separate divider, possessing a first input (10) for the output signal of the said first sensor (3) and a second input determining a variable threshold value for the output signal of the said second sensor (4).

3. Measuring apparatus according to Claim 2, characterized in that the first sensor (3) and/or the second sensor (4) are equipped with means (6) for adjusting the orientation and/or the distance relative to the light source (2).

4. Measuring apparatus according to Claim 2 or Claim 3, characterized in that the thread-guide (5) is adjustable in order to define the precise position of the thread or ribbon (1) between the light source (2) and the first sensor (3).

5. Measuring apparatus according to one of Claims 2 to 4, characterized in that the light source (2) is a point source substantially smaller in extent than the mean width or thickness of the thread or ribbon (1) to be measured and in that it is not equipped with a system of lenses.

6. Measuring apparatus according to one of Claims 2 to 5, characterized in that the width of the small sensitive plate of the first sensor (3) and the distance of the thread or ribbon (1) from this sensor (3) are chosen in such a way that the number provided at the output (13) of the analogue-to-digital converter (9) represents the measured thickness in millimetres or in millimetres times a power of ten.

7. Measuring apparatus according to one of Claims 2 to 6, characterized in that the sampling frequency of the analogue-to-digital converter (9) is determined by the feed-rate of the thread or ribbon (1) at the position of the thread-guide (5) so that the sampling of the converter (9) is carried out for lengths of thread or ribbon less than the length cast onto the sensitive plate of the measuring sensor (3).

**Patentansprüche**

1. Verfahren zum Messen des Wertes einer physikalischen Größe mittels einer ersten Meßvorrichtung (2, 3) an deren Ausgang, in Funktion des Wertes dieser physikalischen Größe, eine elektrische Spannung oder ein elektrischer Strom erzeugt wird, bei welchem gleichzeitig ein Bezugswert dieser physikalischen Größe mittels einer zweiten Meßvorrichtung (2, 4) gemessen wird, die der ersten Meßvorrichtung identisch gleich ist, und bei welchem die Ausgangssignale der genannten Meßvorrichtungen an zwei Eingänge einer Einheit geführt werden, die aus einem Divisor und einem Analog-Digitalumformer besteht, dessen numerische Ausgangssignale in eine Anzeige- und/oder Datenverarbeitungsvorrichtung (14) geführt werden, dadurch gekennzeichnet, daß, unmittelbar und ohne Durchgang durch einen vorgeschalteten Divisor, die Ausgänge der genannten ersten und zweiten Meßvorrichtung (2, 3; 2, 4) entsprechend an einen Analog-Digitalumformer (9) mit einem ersten Eingang (10) für ein analoges Meßsignal und einem zweiten Eingang (11) für ein Analogsignal, das einen veränderbaren Schwellwert des Umformers bestimmt, gelegt werden, sodaß am Ausgang des Umformers (9) ein numerischer Wert erscheint, der den Quotienten des Wertes des Ausgangssignals der ersten Meßvorrichtung (2, 3) durch den Wert des Ausgangssignals der zweiten Meßvorrichtung (2, 4) darstellt.

2. Meßapparat mit einer Lichtquelle (2), deren Licht einerseits auf ein zu messendes Objekt (1) und einen ersten Empfänger (3) und andererseits, ohne das zu messende Objekt zu treffen, auf einen zweiten Empfänger (4), der dem ersten Empfänger identisch gleich ist, fällt, und mit einer Einheit, bestehend aus einem Divisor und einem Analog-Digitalumformer, an welche die Ausgänge der genannten ersten und zweiten Empfänger (3, 4) angeschlossen sind und an deren Ausgang eine Anzeige- und/oder Datenverarbeitungsvorrichtung (14) angeschlossen ist, dadurch gekennzeichnet, daß er eine Führungseinrichtung (5) eines Fadens oder Bandes (1) enthält zur Dicken- oder Breitenmessung während des Durchgangs des zu messenden Fadens oder Bandes (1), daß die Lichtquelle (2) den Schatten oder das Abbild des zu messenden Fadens oder Bandes auf die sensible Scheibe des genannten ersten Empfängers (3) projiziert, und daß er einen, nicht mit besonderem Divisor ausgestatteten, Analog-Digitalumformer (9) mit einem ersten Eingang (10) für das Ausgangssignal des genannten ersten Empfängers (3) und mit einem zweiten Eingang (11), der einen veränderbaren Schwellenwert bestimmt, für das Ausgangssignal des zweiten Empfängers (4) enthält.

3. Meßapparat gemäß Anspruch 2, dadurch gekennzeichnet, daß der erste Empfänger (3) und/oder der zweite Empfänger (4) mit Regelvorrichtungen ausgestattet sind zu ihrer Ausrichtung und/oder Abstandsregulierung in Bezug auf die Lichtquelle (2).

4. Meßapparat gemäß Anspruch 2 oder Anspruch 3, dadurch gekennzeichnet, daß die Führungseinrichtung (5) regelbar ist, um die genaue Lage des Fadens oder Bandes zwischen der Lichtquelle (2) und dem ersten Empfänger (3) zu bestimmen.

5. Meßapparat gemäß eines der Ansprüche 2 bis 4, dadurch gekennzeichnet, daß die Lichtquelle (2) eine Punktlichtquelle wesentlich geringerer Ausdehnung als die Dicke oder Breite des zu messenden Fadens oder Bandes ist, und daß er nicht mit einem Linsensystem ausgestattet ist.

6. Meßapparat gemäß eines der Ansprüche 2 bis 5, dadurch gekennzeichnet, daß die Breite der sensiblen Scheibe des ersten Empfängers (3) und der Abstand des Fadens oder Bandes (1) von diesem Empfänger (3) so gewählt sind, daß der am Ausgang (13) des Analog-Digitalumformers (9) abgelieferte numerische Wert die gemessene Dicke in Millimetern oder in Millimetern mal einer Potenz von Zehn darstellt.

7. Meßapparat gemäß eines der Ansprüche 2 bis 6, dadurch gekennzeichnet, daß die Abtastfrequenz des Analog-Digitalumformers (9) durch die Speisungsgeschwindigkeit des Fadens oder Bandes (1) am Ort der Führungseinrichtung (5) so bestimmt ist, daß die Abtastungen je nach Längen des Fadens oder Bandes erfolgen, die kürzer sind als die auf die Scheibe des Empfängers (3) projizierten Längen.

Fig.1

Fig.2